Europäisches Patentamt

European Patent Office

Office européen des brevets

(11) Publication number: **0 572 935 A1**

# EUROPEAN PATENT APPLICATION

(21) Application number: **93108642.5**

(22) Date of filing: **28.05.93**

(51) Int. Cl.⁵: **G01D 5/24**, G01D 5/252, G01D 5/247

(30) Priority: **02.06.92 IT MI921352**

(43) Date of publication of application:
**08.12.93 Bulletin 93/49**

(84) Designated Contracting States:
**CH DE ES FR GB IT LI SE**

(71) Applicant: **E9 ELETTRONICA S.r.l.**
**Via Milano 15**
**I-22059 Robbiate (Co)(IT)**

(72) Inventor: **Manenti, Carlo**
**Via Cadore 16**
**I-20059 Vimercate(IT)**
Inventor: **Cerini, Roberto**
**Via Roma 23**
**I-20040 Bellusco(IT)**

(54) **Smart sensor with digital output and control comprising a transducer of absolute measure meats of linear and angular displacements.**

(57) The smart sensor for absolute measures of linear and angular displacements comprises: a transducer, using the principle of electric coupling by induction, in presence of time-varying electric signals, between a number of fixed conductors and one or more mobile conductors, placed close to those fixed; a digital processing unit, generating said electric signals and processing what has been detected by the transducer to calculate said measures.

The sensor falls within the cathegory of the so defined "smart sensors". In the various embodiment examples there are described angular displacement sensors with a range of 360° for one or more full rotations, with a resolution << 1°, and linear displacement sensors with a resolution << 1 mm.

Fig. 3

EP 0 572 935 A1

The present invention concerns a smart sensor with digital output and control comprising a transducer for absolute measures of linear and angular displacements.

Sensors comprising transducers of mechanical phisical magnitudes into electric signals can be classified in a number of categories: analog or digital sensors, according to the type of output signal; absolute sensors, if the reference origin of the magnitude to be measured is intrinsic to the transducer; incremental sensors, if the origin is external to the transducer; in this case the transducer has to determine the position of the reference origin, obtaining a measure relevant to the shift of the magnitude to be measured from the said origin.

Further classifications can be made on the basis of the phisical principle used to transform the mechanical magnitude into electric signal: potentiometric resistive, capacitive, piezoelectric, inductive, magnetic, optical transducers, etc..

When a processing is made on the output signals of the transducer by a hardware logic unit, with relevant control software, the category of smart sensors is concerned.

It's not possible in terms of available writing space and useless to make a critical analysis of all the known types of sensors and/or transducers of mechanical phisical magnitudes; so we will only cite two extreme cases, namely resistive potentiometric sensors and absolute digital optical sensors.

The most widely known and also the most economic sensors are of the analog type with the transducer made by a resistive potentiometer and suffer many problems of reliability and average life in bad ambient conditions due to temperature, humidity, pollutant atmospheric agents, etc.., mainly because of the degradation of the cursor contact resistance when sliding on the relevant resistive path.

The absolute digital optical sensors comprise a transducer consisting of a transparent plate coated by a metallic film or anyway by an opaque material, thereon slots being obtained by photografic or similar techniques according to a codified distribution; controlling the light flow from a set of emitting photodiodes to a corresponding set of photodetectors composing the reading system; the received signals make up a digital code identifying the angular position.

Such a kind of system is very stable with the phisical and ambient conditions, very precise and supplies the output with a signal having a regular shape.

These characteristics are however obtained by considerable technological efforts connected to the stability of the used materials, to the mechanical precision of the system which must guarantee the perfect synchronism of the output digital signals in all the functioning conditions, etc.., conditions requiring the sensor be reliable and precise, but also very expensive.

The purpose of the present invention is therefore to overcome the main drawbacks of both the analogic and the digital known sensors, mainly for what concerns the reliability of the former and the embodying difficulties and the industrial costs of the latter, by proposing a type of sensor for the measure of linear and angular absolute displacements, and also of any other phisical magnitude transformable into a mechanical displacement or deformation, having high precision, stability and reliability, low production cost competitive with the existing products due to the very good quality/cost ratio, and mainly extremely flexible, not being purely passive but smart, as widely described in the following.

To reach such a purpose, the subject of the present invention is a smart sensor with digital output and control comprising a transducer for absolute measures of linear and angular displacements, which in all the embodiments is based on the principle of electric coupling by induction which the conductors, being part of the transducer, have when they are close to each other.

When in a stimulating conductor an electric signal is generated composed of digital pulses, a second sensor or receiving conductor, insulated from the former but placed close to it, receives by electrical induction said signal with an intensity depending on the distance of the two conductors.

The amount of signal on the receiving conductor is a function of the voltage on the stimulating conductor, of the kind of signal, and of the capacitance originating between the two conductors, which capacitance depends on the dielectric constant of the medium (for example the air), and on the ratio between the surface of the two conductors and their distance.

The conductor in which the digital pulse is generated is multiplied in a series of stimulating conductors obtained on a mechanical support or planar substrate, and placed at a known distance side by side, so obtaining a measuring scale.

In the case of an angular displacement sensor, the stimulating conductors are placed preferably but not exclusively radially on a plane, over which one or more conductors rotate, while in the case of linear displacement sensor they are placed preferably but not exclusively parallel on a plane, over which one or more sensor conductors longitudinally move.

The sensor conductors embody reading mobile cursors, and consist of planar conductors of suitable shape and dimension moving parallel and close to the plane of the stimulating conductors.

Bursts of digital pulses, with suitable time phase shift depending on the stimulating conductor, are continuously sent to the stimulating conductors. There are then detected only the pulses of the stimulating conductors closer and coupled by electric induction to the sensor conductors sliding over them. The amount of shift of the detected pulses is so converted into an instantaneous position information of the sensor conductors, and then into a value of linear or angular distance to be measured.

To reach such purposes, the subject of the present invention is a smart sensor with digital output and control comprising a transducer for absolute measures of linear and angular displacements, as described in claim 1.

Further subjects of the present invention are the embodying variants described in the depending claims.

Further purposes and advantages of the present invention will be made clear by the following detailed description of some embodiment examples of the same and by the annexed drawings given by way of a non limiting explanation, in which:

- in Fig. 1 an embodiment example is shown of a transducer for the measure of linear displacement according to the invention;
- in Fig. 2 an embodiment example is shown of a transducer for the measure of angular displacement according to the invention;
- in Fig. 3 a block diagram is shown of a generic sensor according to the invention;
- in Figs. 4 and 5 further embodiment examples are shown of the transducer, respectively in the case of a fixed masked and slotted-masked sensor conductor;
- in Figs. 6, 7 and 8 further embodiment examples are shown of the transducer with more sensor conductors;
- in Fig. 9 a block diagram is shown of an embodiment variant of the complete sensor;
- in Fig. 10 a further embodiment example is shown of a transducer for the measure of linear displacement with mobile sensor conductor;
- in Fig. 11 a further embodiment example is shown of a transducer for the measure of angular displacement with fixed slotted-masked sensor conductor;
- in Fig. 12 a further embodiment example is shown of a transducer for the measure of angular displacement combination of the transducers of the Figs. 10 and 11, for multiturn measures.

As already said, the sensors of linear and angular displacements, according to the invention, are based on the principle of electric coupling by induction which two conductors have when they are close to each other.

In one or more fixed stimulating conductors an electric signal is generated composed of digital pulses detected, by electric induction, by one or more sensor conductors placed close to and integral with the moving part; the detected signals, suitably discriminated and amplified, allow to identify the relative position between stimulating conductors and sensors, and therefore to determine the desired information on the measure of effective linear or angular shift.

The conductors, being part of the transducer, through which the coupling occurs, are formed, for the stimulating part, of a series of wires or strips placed side by side, at a known distance suitably calculated to perform a measuring scale, and for the receiving part by mobile cursors consisting of planar conductors of suitable shape and dimensions moving parallel and close to the plane of the stimulating conductors.

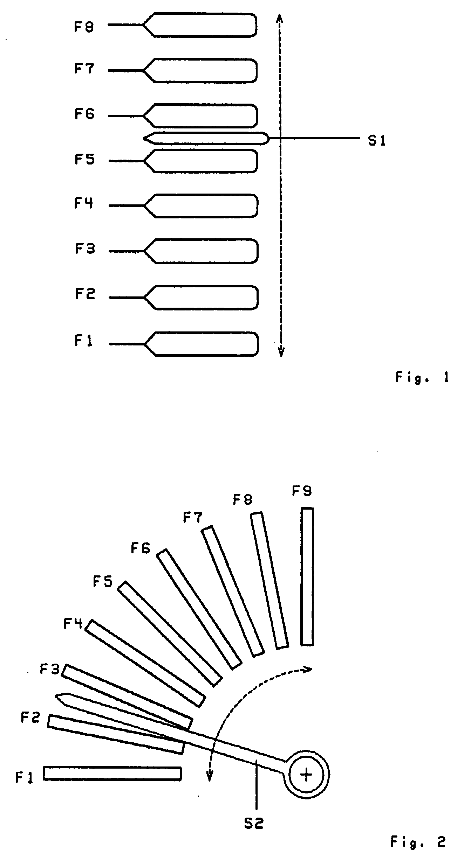

As shown in Fig. 1, in the case of a transducer for linear displacement measure, the stimulating conductors F1, ... F8, are positioned parallel to a plane over which a sensor conductor S1 longitudinally slides.

As shown in Fig. 2, in the case of a transducer for the angular displacement measure, the stimulating conductors F1, .... F9 are placed radially on a plane over which a sensor conductor S2 turns having the shape of a needle pivoted on the center of the dial.

For the sake of explanation simplicity, a planar configuration is choosen for the casse of a linear displacement transducer, but it is obvious that other spatial configurations, i.e. cilindrical, are possible, excepting some embodiment difficulties.

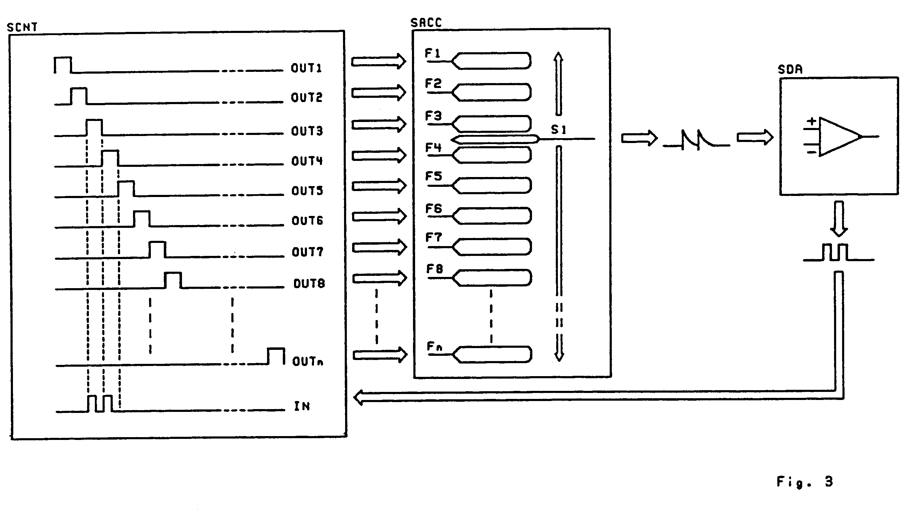

To describe the reading principle of the linear displacement, let's refer to the block diagram of Fig. 3 of a generic sensor device according to the invention.

The device consists essentially of three circuital blocks:

- a control stage SCNT, generating the digital pulses to be sent to the stimulating conductors and receiving and processing the signals detected by the sensor conductor (cursor);
- a coupling transducer SACC, comprising said stimulating conductors and the cursor conductor, for example in the embodiment variant shown in fig. 1;
- a discriminating and amplifying stage SDA detecting the signals coming from the cursor conductor and sending them to the control stage SCNT.

The control stage SCNT generates through its outputs OUT1, ..... OUTn, on the conductors F1,

.....Fn of the coupling transducer SACC, a series of digital pulses in time sequence, and receives at the input one or more signals depending on the relative position of the cursor conductor S1 and the said signals.

As the cursor conductor can receive a high signal only from the conductor or conductors closest to it, the presence at the same time instant, of the received signal and of the i-th ($1<i<n$) pulse generated in the conductor Fi detects the cursor position.

In the example shown in Fig. 3, the cursor conductor S1 is in correspondence with the conductors F3 and F4, and receives both signals coming from the outputs OUT3 and OUT4 of the control stage SCNT.

The signal then flows through the discriminating and amplifying stage SDA, where it is compared with a reference voltage, obviously related to the system sensitivity; it is squared and amplified to a level of digital voltage and is given back to the control stage.

The control stage SCNT mathematically compares the received signal with the signals coming from the outputs OUT1, ......OUTn, and finally calculates the position of the cursor S1, being the position and spacing of the conductors F1, ...Fn known.

The system resolution in this basic configuration corresponds to half the distance between two consecutive conductors: in fact when the sensor conductor is in correspondence with only one conductor Fi, the control stage receives the signal coming from Fi, and possibly in the case of a very sensitive system, receives also the signals from the side conductors F(i-1) and F(i+1), and considers as a cursor position that of the conductor Fi. In the case where the sensor conductor is positioned, as in the example of Fig. 2, between two consecutive conductors Fi, F(i+1), the control stage receives two pulses and cosiders as a cursor position that intermediate between the said two conductors.

The part comprising the conductors Fi, for both linear and angular sensors, can consist of a printed circuit board on which there are obtained conductive lines, distributed, depending on the sensor type, at known linear or angular space intervals; these intervals and their number determine the system resolution and range.

The above described type of transducer is characterized by the necessity of constraining the cursor conductor(s) to one or more wires electrically connecting them with the discriminating and amplifying stage SDA connected to the control stage SCNT, on its turn connected with the conductors F1, ...Fn. Whereas the latter remain fixed during the functioning, and therefore do not give rise to manufacturing shortcomings, the cursor conductor(s) are connected with the fixed part through a wire which must be sufficiently slack to allow them having either longitudinal or radial movements necessary for a mechanical displacement measure.

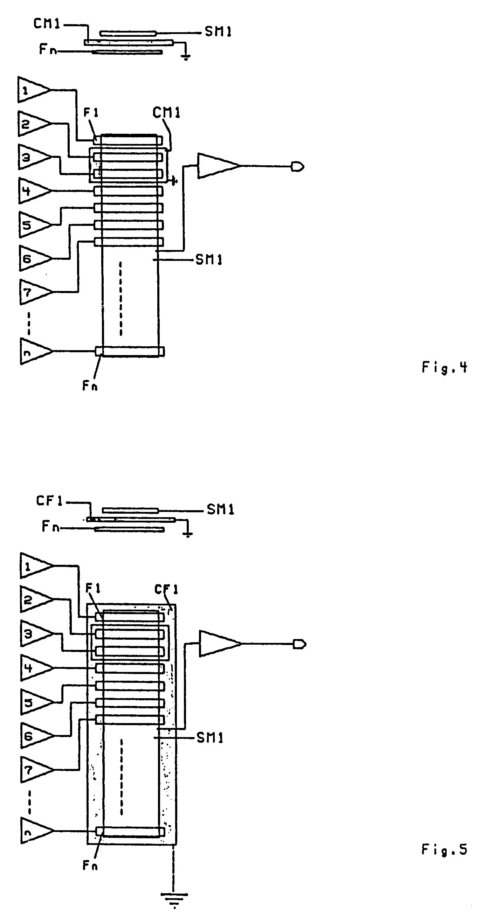

The type of masked cursor transducer described in the following with reference to Fig. 4, solves the problem of the constrain between the moving parts of the transducer.

The part consisting of the stimulating conductors F1, ... Fn is the same as for the mobile cursor method, while the signal receiving part consists of a first fixed sensor conductor SM1, placed in a plane parallel to that of the conductors Fi and having dimensions such that to cover them totally. Therefore such conductor SM1 receives all the pulses sent to the conductors F1, .... Fn.

The moving part of the transducer consists in this case of a second mobile sensor conductor CM1, which, mechanically connected to the system electrical ground, slides electrically insulated in the interspace between the plane of the stimulating conductors F1, ... Fn and the plane of the conductor SM1 receiving the signals, the planes being integral to each other and kept fixed.

So the second conductor CM1 is a moving mask interrupting the coupling between the Fi-th excited stimulating conductor being under it and the first sensor conductor SM1.

At the output of the coupling transducer SACC we then find all the signals present on the conductors F1, ... Fn except the signal(s) masked by the second mobile sensor conductor CM1, so it is possible to detect the radial or longitudinal position, depending on the kind of transducer, without mechanically constraining the moving parts to the fixed parts with wires.

Obviously it is possible to use a detecting position method dual to the preceding one, described with reference to Fig. 5: in fact, if the second sensor conductor CF1 of the transducer consists of only one conductor electrically connected to the system ground, in the support of which some slots are obtained in suitable positions, the first fixed sensor conductor SM1 receives signals from the only stimulating conductors F1, ...Fn positioned in correspondence with the slot of the second sensor conductor CF1.

The manufacturing layout of the control stage SCNT depends on the number of outputs necessary to such a stage, as a function of the number of stimulating conductors Fi of the transducer, and of the number of inputs necessary to process the signals picked up by the cursor(s).

A number of manufacturing layouts of such a stage can be obtained with various methods: either with discrete components or by means of microcontroller systems. In the latter case, high processing performances are obtained with a very high increase of the measuring velocity and versatility of the sensor, and also a sensitive reduction in the number of components, so reducing space and cost.

The manufacturing layout of the control stage determines in addition the format of the measuring signal of the sensor for its interfacing to external systems, the signal being for instance serial parallel, P.W.M. or analog through digital/analog conversion circuits.

The manufacturing layout of the discriminating and amplifying stage SDA can be obtained with a number of methods. Generally speaking this stage receives the input signal(s) coming from the transducer SACC. The signal(s) are then compared with a reference voltage determining the sensitivity of the system, and then amplified to a suitable digital voltage level, to be given back to the control stage SCNT.

In any case from the given description of the carried out functions, the skilled in the art is able to design suitable electronic circuits embodying the functions of both the control SCNT and the discriminating and amplifying stage SDA.

The maximum range, the resolution and the measuring precision of a generic absolute sensor according to the present invention, is a function of the number of conductors Fi, the number of cursors and their control, and then of the kind of control circuit.

Some methods will be described in the following to increase the performances of a generic absolute sensor according to the invention, keeping as a reference, for simplicity, a sensor using a mobile cursor transducer. However, with suitable embodying modifications depending on the case, the described methods to increase the performances of an absolute sensor according to the invention are also valid for all the kinds of the above described transducers.

From the above description it is evident that the stimulating conductors can be seen as the graduations of a measuring scale and that the cursor is the sliding index of such a scale. So in the configuration with only one mobile cursor, the method for increasing the measuring range can be to increase the number of stimulating conductors Fi, while if we want to increase the resolution, it is necessary to reduce the distance or spacing among them, the maximum resolution being equivalent to half a spacing.

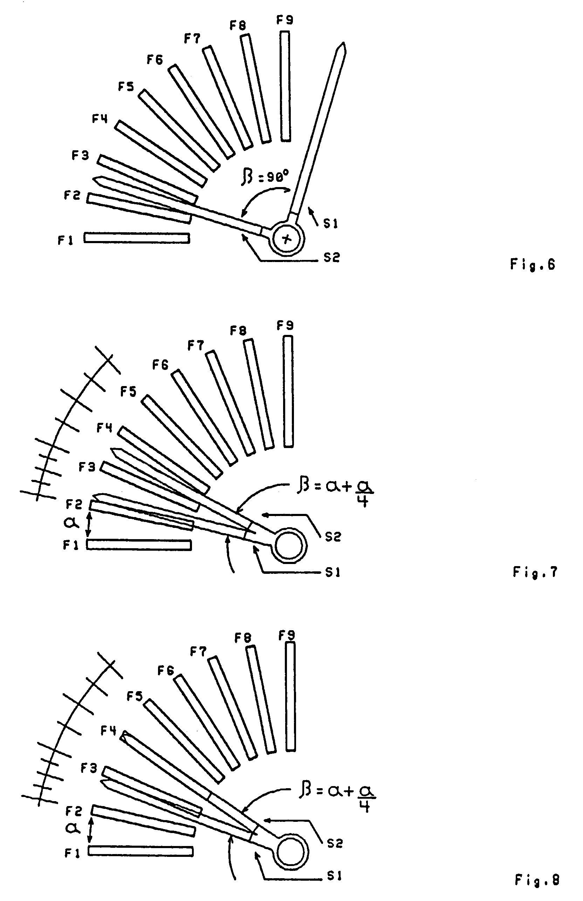

As it is shown in Fig. 6, by adding one or more mobile cursors, connected to respective distinct inputs of the control stage SCNT, it is possible to increase the maximum measuring range of the system, the number of graduations and then of stimulating conductors remaining the same.

Let us suppose for instance to have a scale of n graduations F1, ... Fn, and to use two cursors S1 and S2.

The two cursors are distant n graduations to each other and mechanically integral, and are electrically connected to two separate inputs of the stage SDA, so as when the first cursor overflows, the second cursor begins reading.

Obviously a signal received by the first cursor means that the cursor is in the i-th graduation of the scale, while a signal received by the second cursor means that it is in the (n + i)-th graduation. The control stage SCNT comprises circuital means to distinguish which cursor detects the digital pulses and to keep into account, in the displacement measure, the number of cursors already overflown.

In the case of angular displacements, the advantage of this method is evident not only in terms of fewer electronic components needed, but also because the transducer dimensions remain the same while the maximum angle to be measured increases.

Adding one or more cursors can also serve to increase the reading resolution of the system. Let's consider as an example a configuration having n graduations and only one cursor S1: as previously described, the resolution of the system is equal to half a graduation.

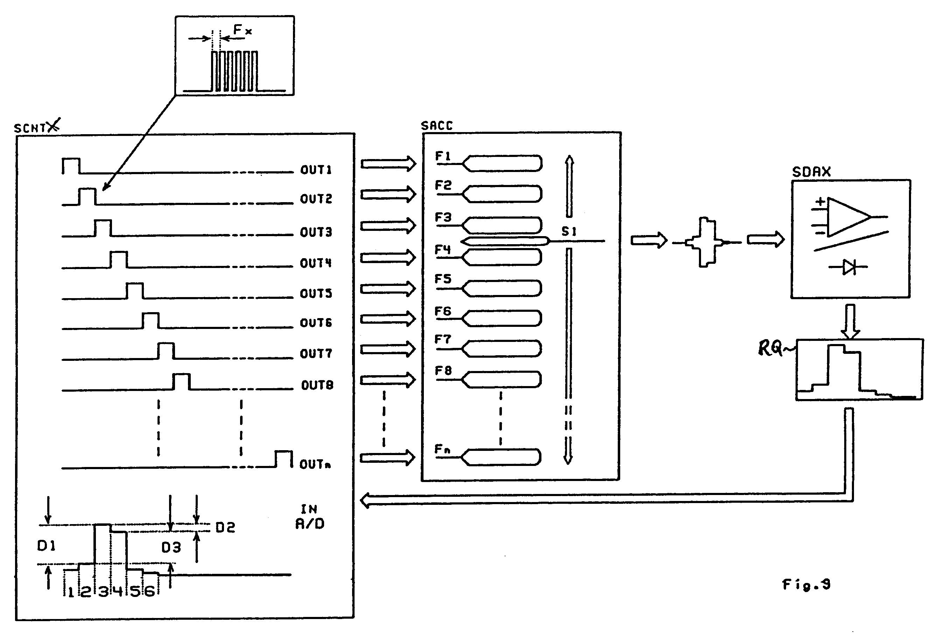

As shown in Figs. 7 and 8, let's add to the system a second cursor S2, connected to another separate input of the control stage SCNT, mechanically constrained to the first cursor S1, so as their reciprocal angular distance is equal to one scale graduation plus a submultiple of it.

Given $\alpha$ one scale graduation, let's the reciprocal angular distance be $\beta = \alpha + \alpha/4$.

The signal generated by the stimulating conductor(s) Fi over which the cursor S1 is placed, is induced on it. In addition to the position detected by S1, it is algebraically added the value of the position detected by the second cursor S2, acting as a nonius for the graduation fractions.

In the example of Fig. 7, in the condition in which the first cursor S1 detects three pulses and the second sensor conductor S2 only two, a value equal to a quarter of angular graduation has to be added to the position identified by S1 (that is the position relating to the central stimulating conductor F2).

On the contrary, in the condition where S1 detects three pulses and S2 also three pulses, as in the example of Fig. 8, a value equal to three quarters of angular graduation has to be added to the position identified by S1 (F2).

In the conditions where S1 receives one or two pulses, the position is identified only by this cursor and the signals coming from S2 are ignored.

From what has been said untill now it is evident that it is possible:

- to exchange the emitted and received signals, that's the stimulating and receiving conductors;
- to use reading strategies by sectors, that's to subdivide the stimulating conductors into two or more groups, i.e. F1, ...Fi and F(i + 1), ....Fn and first identifying which group is the cursor in, and then identifying the cursor position within the group;
- to measure non-linear mechanical displacements, it is in fact enough to suitably vary the spacing between the stimulating conductors Fi;
- to measure angular displacements and rotations: in this case the conductors Fi will have a radial distribution, of the kind of Fig. 2;
- to increase the reading precision as a function of the required range;
- to increase the reading precision by doubling the cursor conductors according to the nonius principle.

A further method can be used to increase the range, the resolution and the precision of a sensor for absolute measures of angular and linear displacements according to the invention.

This method for optimizing the system characteristics, defined High Resolution, can be used in whichever sensor, for absolute measures of angular and linear displacements, independently of the reading method used in the transducing stage SACC which is left unmodified.

The method consists of discriminating and processing in a different way the signals coming from the cursor(s) of the transducer SACC suitably modifying the discriminating stage SDA and the control stage SCNT. For description simplicity, as above, the mobile cursor transducer type will be used.

Referring to the block diagram of Fig. 9, it is shown that the transducing stage SACC is not varied with respect to the block diagram of a generic sensor shown in Fig. 3; on the contrary the control stage SCNTX and the discriminating stage SDAX are constructively and functionally different.

By this optimization method, besides detecting and processing the cursor position as a function of the signals generated by the control stage, it is possible to detect more precisely said position by comparing and processing not only the existence of the signals, but also the signal amplitudes detected by the transducer SACC.

The control stage SCNTX sends, through the outputs OUT1, ...OUTn, to the stimulating conductors F1, ...Fn of the transducer SACC, a digital pulse series in time sequence. Each of said pulses is on its turn, as it is shown in Fig. 9, composed by a burst of digital pulses of frequency Fx. At the output of the transducer SACC a signal is present similar to that present on the same stage in the circuit of Fig. 3. Here for every time interval corresponding to the pulse sent to every stimulating conductor F1, ...Fn, we have not only one pulse, but a series of short pulses of frequency Fx.

The signal so composed goes now to the discriminating stage SDAX which, unlike the stage SDA of Fig. 3, neither compares the input signal with a reference voltage nor amplifies to a digital level the only above-threshold part, but amplifies and processes all the signal, obtaining at the output a signal similar to that shown in the square RQ of Fig. 9.
Namely in this case a threshold does not exist to discriminate the signals coming from the cursor between those higher and lower than it. The stage SDAX keeps into account the voltage amplitude connected with the relative spatial distance of the stimulating conductors Fi from the cursor position.

The control stage SCNTX receives at the input these signals, and through A/D circuits for the analog to digital conversion of the signals, computes their amplitude in the following way: among the measured values the highest three ones are detected; the computation is made of the two differences of the amplitude values of the two other signals with respect to the highest signal (let's indicate the two differences Dmax and Dmin); it is assigned as a cursor position PosF that corresponding to the stimulating conductor Fi giving the highest value signal PosH, algebraically added (with sign) to a calculated percentage of the distance d between two conductors Fi. As a first approximation we can use a simplified formula of the following kind:

$$PosF = PosH \pm d/2 \, (Dmax\text{-}Dmin)/(Dmax + Dmin)$$

For example if among the three received signals two consecutive are find of equal amplitude and both of higher value than the third, either Dmax or Dmin vanishes, as obviously the position is middle between the two stimulating conductors Fi, F(i + 1) giving the signals of equal amplitude.

If on the contrary the two equal amplitude signals are spaced by the higher amplitude third signal, then Dmax = Dmin, as we fall within the case where the cursor is centered in correspondence with the conductor Fi originating the third signal.

The maximum resolution and precision obtainable by using the High Resolution optimization method is only theoretically unlimited; the obtained resolution depends in fact on the precision of the A/D converter, included into the control stage SCNTX, in determining the amplitude measure, and on mechanical factors which can partially be avoided by using, for the transducer, thin or thick film technologies, alternative to the more economic printed circuit technology and whose use depends on a balance between required performances and relating costs.

If we take a linear sensor with distance between two consecutive stimulating conductors equal to 1mm, using in the control stage SCNTX a 8-bit A/D converter theoretically allows having a resolution of 256 graduations every half millimeter (0.5mm). Experimentally, in the case of angular measures, a sensor has been made able to measure 0.1° on a full scale of 360°, with transducer embodied in printed circuit technology.

Concerning the choice of the type of control SCNTX and discriminating SDAX stage, all the considerations made in the description of the block diagram of Fig. 3 remain valid.

Precise laboratory tests have checked the precision and stability of sensors according to the invention, which is obviously connected to the quality of the components used, to their response characteristics in humid ambient and temperature.

Consumer-standard components cover the normal needs. In the case a wide temperature range is necessary in which the sensor has a high performance stability, the use of higher standard electronic components is enough for its embodiment.

A number of variants are possible for the skilled in the art, for the embodiment configurations of the sensor of the invention, without going out of the novelty principles of the inventive idea.

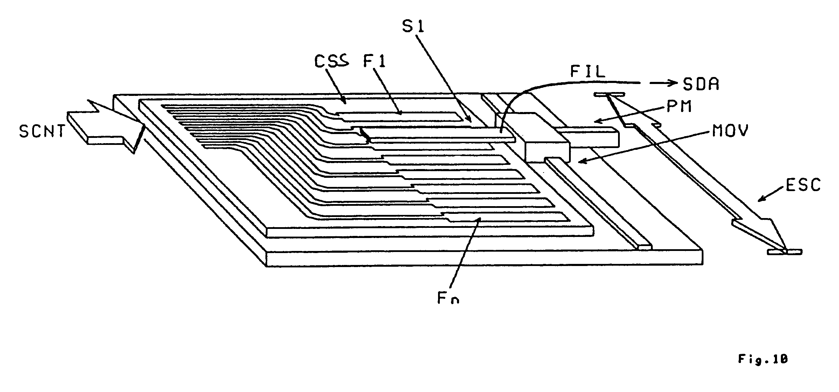

A first embodiment example of a sensor for absolute linear measures with one-input mobile cursor transducer is shown in Fig. 10.

For the manufacturing of the transducer part relating to the stimulating conductors Fi, a support for printed circuit boards CSS has been used, on which copper conductive paths F1, ...Fn are obtained connected to the control stage SCNT outputs (Fig. 3).

The cursor S1 consists of a conductor fixed to a mobile support MOV, allowing obtaining a range ESC equal to the interaxial distance between the first and the last stimulating conductor Fi, sliding over them without touching parallel to the support plane. The movement is controlled by the measuring pivot PM which in this case is the mechanical interface between the system to be measured and the sensor itself.

An electric conductor FIL connects the cursor S1 to the discriminating and amplifying stage SDA (Fig. 3).

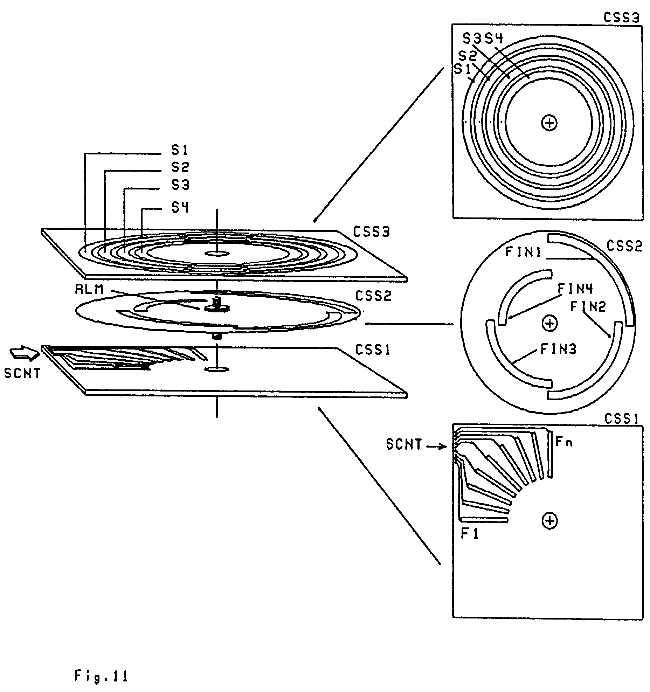

A second embodiment example of a sensor for absolute angular measures with slotted-mask cursor transducer, four stage detector and 360° range, is shown in Fig. 11.

Mechanically the sensor consists of three printed circuit boards CSS1, CSS2, CSS3, superimposed over each other. The printed circuit CSS1, carrying the stimulating conductors Fi, and the printed circuit CSS3, carrying four conductors S1, ...S4, receiving the signals from the n conductors Fi, are integral to each other and mechanically constrained to the sensor body.

On the contrary the thiner printed circuit CSS2 (cursor) carries a metallic plate (slotted mask) and is placed in between the other two circuits free to rotate, thanks to a shaft ALM which is the mechanical interface between the system to be measured and the sensor itself.

The stimulating conductors Fi are placed radially on a sector with 90° angular range and are connected to the outputs of the control stage SCNT (Fig. 3). The conductors S1, ...S4 placed on the printed circuit CSS3 consist of four circular concentric paths with differing diameters. The rotating metallic plate or cursor CSS2, constrained to the shaft ALM, has four circular slots FIN1, ...FIN4, with angular amplitude 90° and width equal to that of conductors S1, ...S4. Each slot is in vertical correspondence with one of the four circular paths S1, ...S4, and is parallel and superimposed for a quarter of circumference.

In this way, with a given angular position of the shaft ALM, it is first detected which circumference sector it belongs to, through the presence of signals on the conductors S1, ...S4, as only when the slots FIN1, ...FIN4 are in correspondence with both the dial of the conductors F1, ...Fn and the above seen conductors Si, the free flow of signals sent to them occurs.

The position identifying the effective angle to be measured is then calculated by the control stage SCNT by counting the number of signals crossing the slot of the circumference sector now known, with for instance the convention that, for the slot FIN1, '0' is added to the counting, for the slot FIN2 '90°' is added, etc.....

Once again it is to be underlined that the reading logic or strategy above described is only given for clarifying purpose and is not exaustive of the main principle of the present invention.

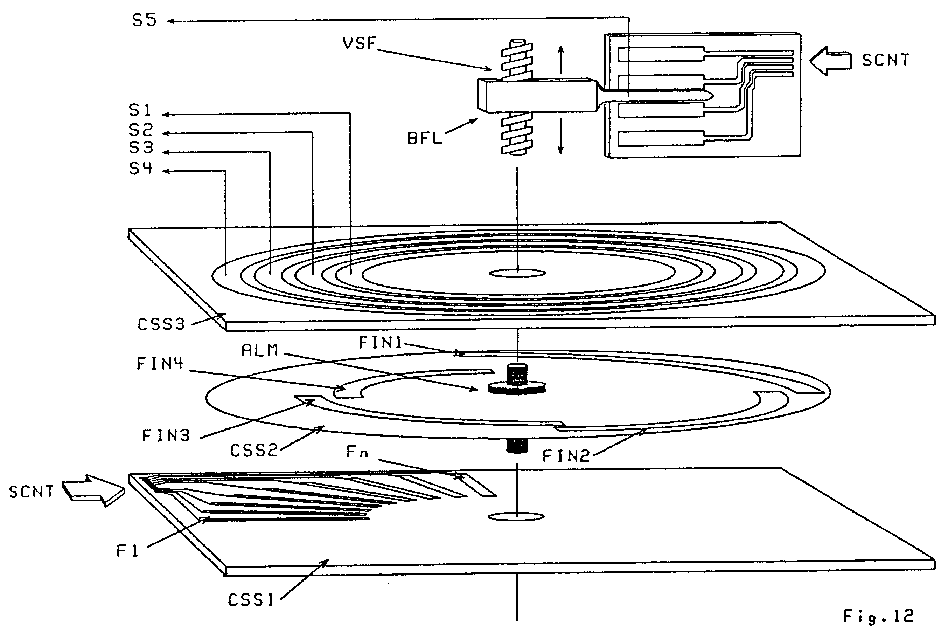

In Fig. 12 a third embodiment example is shown of a sensor for absolute angular measure having a transducer with five signal detectors, and a range of multiples of 360°. Mechanically the sensor is composed by the merging of two distinct transducers, respectively similar to those just described in connection with Figs. 10 and 11.

The angular sensor using a transducer with slotted mask and four signal detectors, as described with reference to the Fig. 11, detects the angular position of the shaft ALM within a round angle (360°).

The measuring shaft ALM is in addition mechanically constrained to an endless screw VSF on which, during the shaft rotation, a threaded pivot BFL screws carrying the cursor S5 of a linear mobile cursor transducer, similar in the principle to that of the example of Fig. 10. The latter, depending on the rotation of the shaft ALM, informs the control stage SCNT on the number of full turns of the shaft ALM.

**Claims**

1. Smart sensor with digital output and control comprising a transducer for absolute measures of linear and angular displacements, characterized in that it essentially comprises:
   - fixed stimulating conductors (F1, ...Fn), positioned at a known distance side by side, to each one of them electric signals being supplied as a series of digital pulses suitably time delayed;
   - one or more sensor conductors (S1; S2; SC1, SC2, SC3), positioned near to said stimulating conductors, and at least in part mechanically constrained to a moving part identifying said displacement, and detecting by electric induction said digital pulses relating to a certain number of nearer stimulating conductors; also characterized in that it further comprises:
   - electronic control means (SCNT, SDA) comprising: means for generating said electric signals and supplying them to said stimulating conductors; means for receiving the digital pulses detected by said sensor conductors; means for computing a relative position between stimulating and sensor conductors, on the basis of a comparison between the received electric pulses generated and detected; means for transforming said relative position into a measure of said linear or angular displacement.

2. Smart sensor as in claim 1, characterized in that said stimulating conductors (F1, ...Fn) are preferably disposed radially on a plane support over which a sensor conductor rotates (S1) pivoted on the dial center, said sensor conductor detecting by electric induction said digital pulses relating to a limited number of nearer to it stimulating conductors.

3. Smart sensor as in claim 1, characterized in that said stimulating conductors (F1, ...Fn) are preferably disposed parallel on a plane support, over which a sensor conductor longitudinally slides detecting by electric induction said digital pulses relating to a limited number of nearer to it stimulating conductors.

4. Smart sensor as in claim 1, characterized in that said sensor conductors consist of: a first sensor conductor (SM1) with wide surface, fixed and totally superimposed to a surface on which all the stimulating conductors lie, being able to detect by electric induction all the digital pulses present on the latter; a second mobile sensor conductor (CM1), which, constrained to a moving part identifying said displacement and connected to electric ground, slides elctrically insulated between the stimulating conductors and said first sensor conductor (SM1), so interrupting said electric induction between the stimulating conductor(s) being in correspondence of it and the first sensor conductor (SM1); said first sensor conductor (SM1) supplying said electronic control means (SCNT, SDA) with said detected digital pulses relating to the stimulating conductors which do not lie in correspondence of said second mobile sensor conductor (CM1).

5. Smart sensor as in claim 1, characterized in that said sensor conductors consist of: a first sensor conductor (SM1) with wide surface, fixed and totally superimposed to a surface on which all the stimulating conductors lie, being able to detect by electric induction all the digital pulses present on the latter; a third mobile sensor conductor (CF1) having a wide surface with one or more slots, which, constrained to a moving part identifying said displacement and connected to electric ground, slides elctrically insulated between the stimulating conductors and said first sensor conductor (SM1), so allowing said electric induction only for the stimulating conductor(s) being in correspondence of said slots; said first sensor conductor (SM1) supplying said electronic control means (SCNT, SDA) with said detected digital pulses relating to the stimulating conductors which lie in correspondence of said slots.

6. Smart sensor as in claim 1, characterized in that said sensor conductors (S1, S2), being more than one, are mechanically constrained to each other at a linear or angular distance equal to the maximum linear or angular surface of presence of stimulating conductors, so as when a generic moving sensor conductor (S1) goes out of said maximum stimulating conductors surface, a subsequent moving sensor conductor (S2) begins coming in; and in that said electronic control means (SCNT, SDA) comprise means for identifying the sensor conductor detecting digital pulses, and for adding to said computed relative position a value keeping into account the number of sensor conductors already out of said maximum surface of the stimulating conductors.

7. Smart sensor as in claim 1, characterized in that it comprises a first (S1) and a second (S2) sensor conductor, mechanically constrained to each other at a linear or angular distance equal to the linear or angular distance present between two consecutive stimulating conductors plus a fraction of said distance, and in that said electronic control means (SCNT, SDA) compute said relative position on the basis of the position of said first sensor conductor (S1), increased by a quantity keeping into account said fraction.

8. Smart sensor as in claim 7, characterized in that said fraction is equal to a quarter of said distance, and in that when the first sensor conductor (S1) detects the pulses of the three adjacent stimulating conductors nearest to it, and the second sensor conductor (S2) detects the pulses of one or two most adjacent stimulating conductors, said increase quantity is respectively equal to three quarters or to one quarter of said distance or angle; when the first sensor conductor (S1) detects the pulses of one or two stimulating conductors nearest to it, said increase quantity is zero.

9. Smart sensor as in claim 5, characterized in that said stimulating conductors (F1, ...Fn) are placed radially on a first plane in an angular sector equal to 360°/m; in that said first wide surface fixed sensor conductor comprises m conductors (S1, ...S4) with shape of circles concentric with said dial on a second plane parallel to the first one; and in that said third wide surface mobile sensor conductor rotates concentric with said dial on a third plane parallel and intermediate to the others, and in that said slots consist of m 360°/m wide circular sectors, each of them placed in correspondence with one of said concentric circle and in an angular position different from the others, and in that said electronic control means (SCNT, SDA) comprise means for identifying the concentric circle conductor detecting the digital pulses, and compute said relative position as an addition of the angular position relevant to the number of stimulating conductors coming time to time under one of the circular sectors, and of an angle equal to the addition of the circular sectors of the slots already gone totally out of said dial of stimulating conductors.

10. Smart sensor as in claim 9, characterized in that it further comprises:
- further stimulating conductors placed parallel on a plane support, over which longituninally slides a further sensor conductor (S5) detecting by electric induction said digital pulses relevant to a limited number of said further stimulating conductors nearest to it;
- transducing means of the rotation of said second wide surface sensor conductor (CSS2) into longitudinal movement of said further sensor conductor (S5);
- means for transforming, comprised in said electronic control means (SCNT, SDA), said pulses detected by said further sensor conductor (S5) into information identifying the turn in which said second wide surface sensor conductor (CSS2) lies, to obtain a multiturn angular displacement measure.

11. Smart sensor as in any one of the preceding claims, characterized in that said digital pulse series sent to the stimulating conductors consist of digital pulses of predetermined frequency, with a suitable time shift depending on the same stimulating conductor, so as the particular time location of a pulse can univocally identify a corresponding stimulating conductor, and in that said electronic control means (SCNT, SDA) convert the time shift of the received detected pulses into information of instantaneous position of the sensor conductors, and therefore into angular or linear distance value to be measured.

Fig. 1

Fig. 2

SDA

SACC

S1

F1 F2 F3 F4 F5 F6 F7 F8 Fn

SCNT

OUT1 OUT2 OUT3 OUT4 OUT5 OUT6 OUT7 OUT8 OUTn IN

Fig. 3

Fig.4

Fig.5

F9
F8
F7
F6
F5
F4
F3
F2
F1

$\beta = 90°$

S1
S2

Fig.6

F9
F8
F7
F6
F5
F4
F3
F2
F1

$\beta = \alpha + \dfrac{\alpha}{4}$

S2

$\alpha$

S1

Fig.7

F9
F8
F7
F6
F5
F4
F3
F2
F1

$\beta = \alpha + \dfrac{\alpha}{4}$

S2

$\alpha$

S1

Fig.8

13

Fig.9

Fig.18

Fig.11

Fig.12

S5

VSF

SCNT

S1
S2
S3
S4

BFL

CSS3

ALM          FIN1

FIN4

FIN3          CSS2          Fn          FIN2

SCNT

F1

CSS1

EP 0 572 935 A1

17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 436 681 (MITUTOYO  MFG CO LTD) | 1,3,4,6, 7,11 | G01D5/24 G01D5/252 G01D5/247 |
| Y | * the whole document * | 5 | |
| A | RADIO FERNSEHEN ELEKTRONIK vol. 39, no. 2, 1990, BERLIN DD pages 119 - 121 V.RÖSSLER  ;  H.MÄDLER 'INTELLIGENTER SENSOR MIT U 8820' | 1 | |
| X | US-A-3 766 544 (J.E.BATZ) * the whole document * | 1,2,11 | |
| A | IEEE MICRO vol. 4, no. 5, October 1984, NEW YORK US pages 44 - 54 E.HABEKOTTÉ  ;  S.CSERVENY 'A SMART DIGITAL-READOUT CIRCUIT FOR A CAPCITIVE MICROTRANSDUCER' | 1 | |
| Y | GB-A-2 096 328 (SCHLUMBERGER CANADA LTD) | 5 | TECHNICAL FIELDS SEARCHED (Int. Cl.5 ) |
| A | * the whole document * | 9 | |
| X | WO-A-9 001 760 (SIECOR CORPORATION) * page 14, line 12 - page 22; figures 5-16 * | 1,2,11 | G01D |
| A | GB-A-2 097 128 (A.H.MEDWIN) * the whole document * | 1-9 | |
| A | EP-A-0 258 725 (HENGSTLER GMBH) * page 9, line 32 - page 10, line 23; claim 1; figures 4,5 * | 1,5,9 | |

-----

The present search report has been drawn up for all claims

| Place of search | Date of completion of the search | Examiner |
|---|---|---|
| THE HAGUE | 17 SEPTEMBER 1993 | BROCK T.J. |

EPO FORM 1503 03.82 (P0401)